(19) Europäisches Patentamt
European Patent Office
Office européen des brevets

(11) Publication number: **0 312 339**
**A2**

(12) **EUROPEAN PATENT APPLICATION**

(21) Application number: 88309564.8

(51) Int. Cl.[4]: **G 11 B 7/24**

(22) Date of filing: 12.10.88

(30) Priority: 13.10.87 JP 257942/87
13.10.87 JP 257943/87
13.10.87 JP 257944/87

(43) Date of publication of application:
19.04.89 Bulletin 89/16

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Yoshitake, Junichi
5 Yusyudai-nishi 2-chome
Ichihara-shi Chiba (JP)

Yamanaka, Tooru
5 Yusyudai-nishi 2-chome
Ichihara-shi Chiba (JP)

(74) Representative: Myerscough, Philip Boyd et al
J.A.Kemp & Co. 14, South Square Gray's Inn
London, WC1R 5EU (GB)

(54) **Optical information recording media and optical recording systems.**

(57) In accordance with the present invention, there are provided optical recording medium comprising (I) organic compound having hydrophobic groups and hydrophilic groups and exhibiting optical activity and (II) coloring matters, or optical recording media comprising organic compounds having hydrophobic groups and hydrophobic groups, a light absorption site in the molecule and exhibiting optical acivity. In these recording media, a structure or state of aggregation of said recording media, is varied by irradiation with beam of light and the difference in the angle of optical rotation of said recording media before and after the irradiation, whereby the pieces of information recorded are read out.

Furthermore, in accordance with the present invention, there can be recorded a plurality of pieces of information in one recording spot by laminating on a substrate a plurality of the above-mentioned recording media.

EP 0 312 339 A2

**Description**

## OPTICAL INFORMATION RECORDING MEDIA AND OPTICAL RECORDING SYSTEMS

### FILED OF THE INVENTION

This invention relates to optical information recording media and more particularly to optical recording media which is capable of fulfilling stable, highly sensitive and high density recording.

Further, the invention relates to optical recording systems by which the stable, highly sensitive and high density recording can be performed.

### BACKGROUND OF THE INVENTION

Utilization as information recording media of organic substances having photochromic function is already known, for example, from "Imaging Technology," the February number of 1971, pp-3-18.

As a means of highly densifying an information to be optically recorded, an attempt has been made to use a recording system capable of recording pieces of information with a plurality of bits per one spot of light, that is, a multiple wavelength recording.

As the technique for performing the above-mentioned recording system, optical recording media are proposed, for example, in Japanese patent L-O-P Publn. No.203450/1986, said recording media having laminated on the substrate thereof groups of recording layers comprising various kinds of photochromic coloring matters different in wavelength of the light to be absorbed thereby.

When photochromic materials are irradiated with light of a specific wavelength, their absorption spectrum will reversibly change due to the photoisomerization reaction caused by the irradiation. The desired information is recorded by utilization of the difference in such light absorption characteristics. In that case. however, because the recorded information is reproduced by the change in light absorption characteristics, at the time when the recorded information is read out, it is necessary to read out the recorded information by means of light in the wavelength region wherein the light is absorbed. The light used for reading out the information in the manner as mentioned above is the one intended for reading out the information and, at the same time, for erasing the information. On that account, carrying out reproduction of the recorded information essentially results in destruction of the information. Therefore, the above-cited recording system involved such a serious practical problem that the information recorded on the photochromic materials is destroyed at the time when the recorded information is intended to read out and hence it becomes impossible to read out said recorded information for the second time.

### OBJECT OF THE INVENTION

The present invention is intended to solve such a problem as mentioned above, and an object of the invention is to provide optical recording media which is capable of fulfilling stable, highly sensitive and high density recording, wherein the desired information can be recorded, erased and read out easily and stably.

A further object of the invention is to provide optical recording system by which the stable, highly sensitive and high density recording can be performed so that the desired information can be recorded, erased and read out easily and stably.

### SUMMARY OF THE INVENTION

The first optical recording media of the present invention is characterized in that said recording media comprises (I) organic compounds having hydrophobic and hydrophilic groups and exhibiting optical activity (hereinafter called the first optically active organic compounds) in combination with (II) coloring matters, wherein the desired information recorded on said recording media is read out by varying at least one structure or state of aggregation of said organic compound and coloring matters under irradiation with beam of light and detecting the difference in an angle of optical rotation of said organic compounds and coloring matters before and after the irradiation.

The second optical recording media of the present invention is characterized in that said recording media comprises organic compounds having hydrophobic and hydrophilic groups, containing a light absorption site in the molecule and exhibiting optical activity (hereinafter called the second optically active organic compounds), wherein the desired information recorded on said recording media is read out by varying the structure or gathered state of said organic compounds under irradiation with beam of light and detecting the difference in the angle of optical rotation of said organic compounds before and after the irradiation.

The optical recording system of the present invention is characterized in that a plurality of optical

information recording media different in light absorption wavelength region from one another are laminated succesively on a substrate, and the optical information recording media is irradiated with light, said recording media varying in the angle of optical rotation by the difference in wavelength region of the light with which the recording media are irradiated, whereby the desired information is recorded and read out by detecting the difference in the angle of optical rotation of the recording media before and after the irradiation.

## BRIEF DESCRIPTION OF THE DRAWING

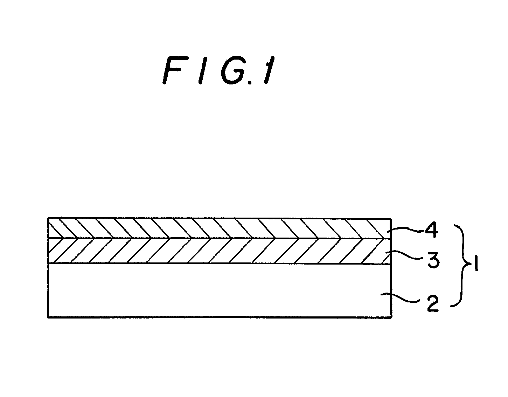

Fig.1 is a section a view of the optical information recording medium used in the optical recording system of the present invention.

1...Optical recording medium
2...Substrate
3...First information recording layer
4...Second information recording layer

## DETAILED DESCRIPTION OF THE INVENTION

First, the optical recording media of the present invention are illustrated below in detail.

In the first and second optical recording media, the recording of information is effected by utilizing characteristics of the recording media, the optical activity of which changes when said recording media is irradiated with light. Accordingly, in order to enhance the sensitivity of recording media at the time when the desired information is recorded thereon and the recorded information is read out therefrom, it is necessary that said recording media will change largely in optical activity when they are irradiated with light. On that account, in the first optical recording media of the present invention, there are used such optical recording media as comprising (I) organic compounds having hydrophobic groups and hydrophibic groups, and exhibiting optical activity (the first optically active organic compounds) in combination with (II) coloring matters.

Furthermore, in the second optical recording media of the present invention, there are used such optical recording media as comprising organic compounds which have hydrophobic groups and hydrophilic groups and also have a light absorption site in the molecule and which exhibit optical activity (the second optically active compounds).

The first optically active organic compounds used in the present invention are compounds which have hydrophobic groups and hydrophilic groups and exhibit optical activity. When the first optically active organic compounds as mentioned above are irradiated with light, there is noted such a phenomenon that a structure or state of aggregation of said compounds is varied to cause a change in molecular rotation, i.e. optical rotation, of the compounds. In the present invention, the desired information is recorded, erased and read out by applying the above-mentioned, phenomenon to optical recording.

In the first optically active organic compounds of the present invention, the hydrophilic group is defined as a generic term for acid group, basic group or amphoteric group. Useful acid group includes in general sulfone group, carboxyl group, phosphoric acid group, hydroxyl group and salts thereof, and useful basic group includes in general amino group, substituted amino group, quaternary ammonium group and salts thereof.

In the first optically active organic compounds of the present invention, from the standpoint of stability of the resulting film and easiness in obtaining starting materials therefor, useful hydrophobic group is intended to include such groups as comprising 1 to 3 straight chain alkyl groups of 4-30 carbon atoms or halogen-substituted groups thereof and, if necessary, containing inside the hydrophobic chain such divalent group as mentioned below.

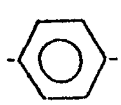 , 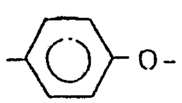 , 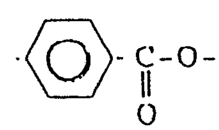 , 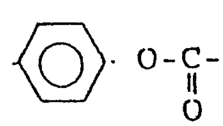

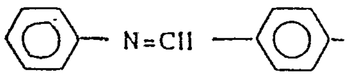 , 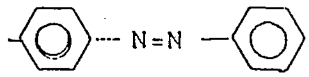 , 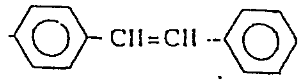 ,

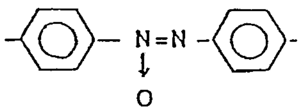 , 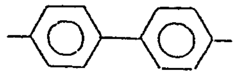 , 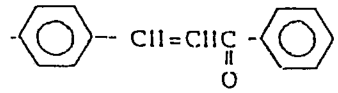

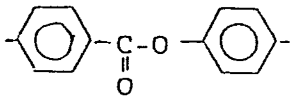 , 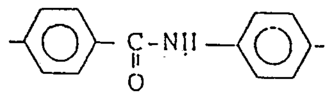 ,

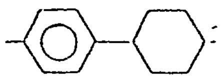 , 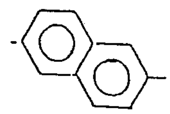 , 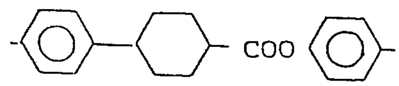 .

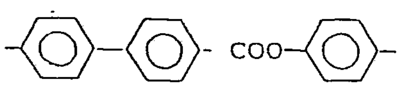 , 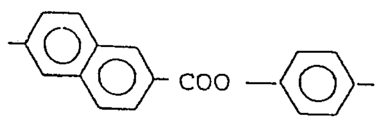 ,

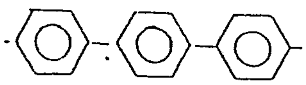 , 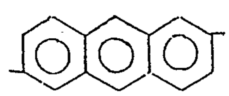 , 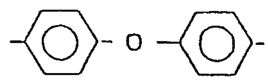 ,

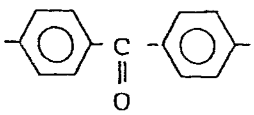 , 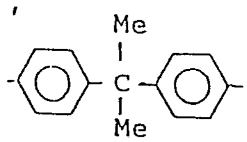 , 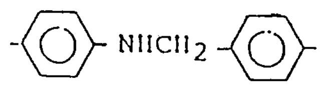 ,

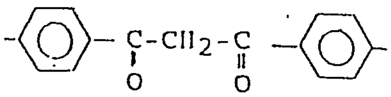 , 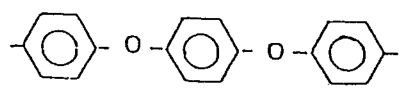 ,

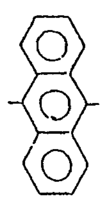 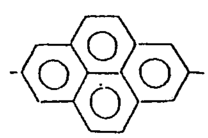

In cases where the hydrophobic group contains in the hydrophobic chain the divalent group as mentioned above, the aforesaid carbon number of the straight chain alkyl group does not include carbon atoms of said divalent group and of the linking portion of said divalent group and said straight chain alkyl group.

In the present invention, the first optically active organic compounds must have an asymmetric center. On that account, it is necessary that the first optically active organic compound contain in the hydrophobic group thereof an asymmetric carbon atom derived from amino acid group and the like.

As the first optically active organic compounds of the present invention, there may be used any known compounds so long as they are those as defined above. Representatives of the first optically active organic compounds of the present invention which are useful in general are those as having the following formulas.

①

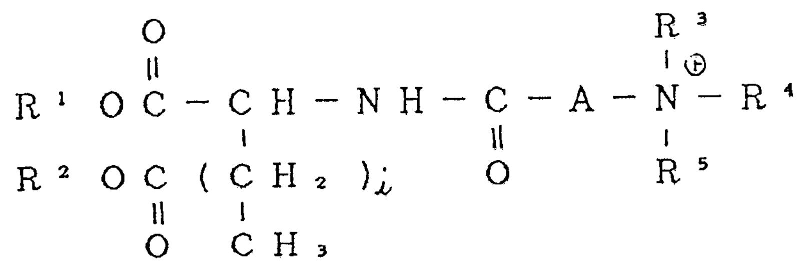

wherein $R^1$ and $R^2$, which may be the same or different, are each a straight chain alkyl group of 6-30 carbon atoms or its halogen-substituted group, $R^3$, $R^4$ and $R^5$, which may be the same or different, are each an alkyl group of 1-4 carbon atoms or its halogen- and/or hydroxyl-substituted group. A is $-(B)_{\ell}-(CH_2)_k-$ (in which B is the aforementioned divalent group, $\ell$ is 0 or 1, and k is a positive integer), and i is 0-2.

②

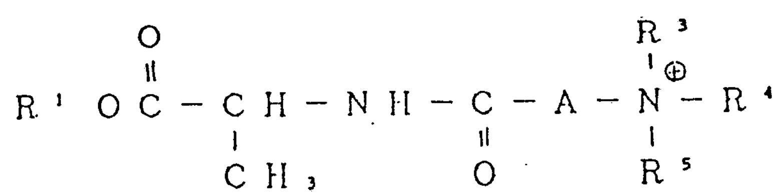

wherein $R^1$,$R^3$,$R^4$,$R^5$ and A are as defined above.

③

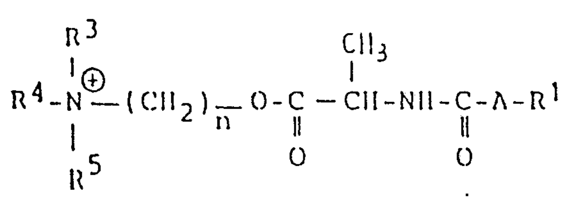

wherein $R^1$,$R^3$,$R^4$,$R^5$ and A are as defined above, and n is a positive integer.

④

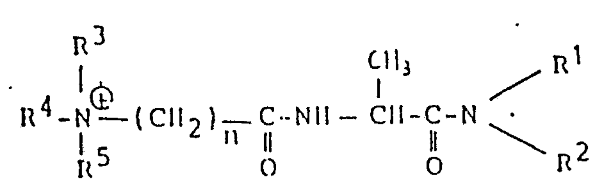

wherein $R^1$,$R^2$,$R^3$,$R^4$ and $R^5$ are as defined above, and n is a positive integer.

⑤ 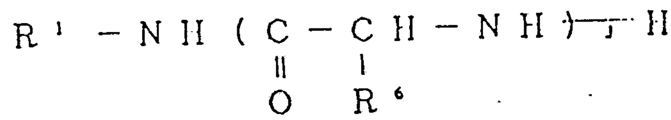

wherein $R^1$ is defined above, $R^6$ is $-CH_3-CH(CH_3)_2$, $-CH_2CH(CH_3)_2$, $-CH_2-$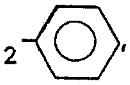, $-(CH_2)_4-NH_2$, $-(CH_2)_2-COOH$, $-CH_2-COOH$, or $-CH_2-S-COOCH_2-$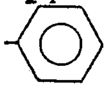, and j is a positive integer.

⑥ 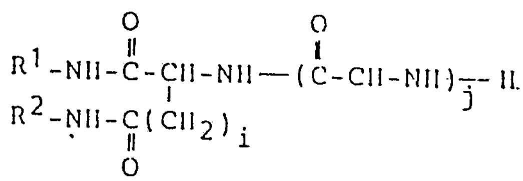

wherein $R^1$,$R_2$ and $R^6$ are as defined above and 1 is 1 or 2.

In the present invention the other component used in combination with the above-mentioned first optically active organic compounds is (II) coloring matters. By coloring matters as used herein are meant those which absorb light of ultraviolent region, visible light range or infrared region to isomerize themselves or change a state of aggregation, or those which absorb light and optically isomerize the optically active organic compounds (I) or change a state of aggregation thereof by means of the energy of the absorbed light.

As the coloring matters (II) which reversibly isomerize themselves, preferably useful are photochromic compounds.

Many compounds are known as photochromic compounds, such as spiropyran, fulgide, thioindigo and azobenzene, and these compounds are all usable in the present invention.

The coloring matters (II) other than the photochromic compounds include metal complexes, cyanine dyes, naphthoquinone dyes, squalilium dyes, methine dyes, pyrilium dyes, tetraheterofulvalene, metallic salts, etc,

These dyes illustrated above are desirably used in an amount of 0.001 - 5 mole, preferably 0.01 - 1 mole based on 1 mole of the first optically active organic compound.

The coloring matters (II) may also be used in a state where they are chemically bonded to the optically active organic compounds.

The first optical recording media of the present invention may be formed solely from the two components, i.e. the first optically active organic compounds (I) and coloring matters (II) as illustrated above, or may be formed by dispersing or dissolving said two components in other polymers which are excellent in film-forming properties.

Useful polymers excellent in film-forming properties are, for example, sodium polystyrenesolfonate, sodium polymethacrylate, carboxymethyl cellulose, sodium alginate, heparin, etc.

The first optical recording media of the present invention are suitably used in their state where they are formed into a thin film by coating the above-mentioned components on a substrate by the cast method, spin coat method or Langmuir's blojet method.

The second optical recording media of the present invention are illustrated hereinafter.

The second optically active organic compounds used in the second optical recording media of the present invention have hydrophobic groups and hydrophilic groups, exhibit optical activity and have a light absorption site in the molecule and, moreover, they show a very large molecular rotation. (Refer, for example, to Chem. Lett., 1980, 1374). When the second optically active compounds as mentioned above are irradiated with light, there is noted such a phenomenon that a structure or state of aggregation of said compounds is varied to cause a change inmolecular rotation, i.e. optical rotation, of the compounds. In the present invention, the desired information is recorded, erased and read out by applying the above-mentioned phenomenon to optical recording.

The hydrophobic groups and hydrophilic groups in the second optically active organic compounds are the same groups as in the first optically active organic compounds as aforesaid.

The second optically active organic compounds as mentioned above must have an asymmetric center. On that account, it is necessary that the second optically active organic coumpounds contain in the hydrophobic group thereof an asymmetric carbon atom derived from amino acid group and the like.

By light absorption site as contained in the second optically active compounds mentioned above is meant

such site that it absorbs light of a certain specific wavelength to optically isomerize said optically active organic compounds or change a state of aggregation thereof by means of the energy of the absorbed light, thereby changing an angle of optical rotation thereof, and such site is generally called a chromogenic group.

As chromogenic groups which reversibly isomerize themselves, there are preferably used photochromic molecular groups

Many photochromic molecular groups are known, such as spiropyran molecular group, fulgide molecular group, thioindigo molecular group and azobenzene molecular group, and they are all usable in the present invention. Of these molecular groups, suitably used are particularly those which are based on cis-trans isomerization of unsaturated double bond in the azobenzene molecular group having a skeletal structure of -N=N-, or the indigo or thioindigo molecular group having a skeletal structure of -C=C-.

Chromogenic groups other than the photochromic molecular groups include metal complexes, cyanine molecular groups, naphthoquinone molecular groups, squalium molecular groups, methine molecular groups, pyrilium molecular groups, tetraheterofulvalene molecular groups, metallic salts, etc.

As the second optically active compounds of the present invention, there may be used any known optically active organic compounds without particular lamination so long as they have hydrophobic groups and hydrophilic groups, and a light absorption site in the molecule and, moreover, they exhibit optical activity.

In the second optical recording media of te present invention, the second optically active organic compounds may be used, if necessary, in combination with (II) the coloring matters in the same way as in the case of the first optical recording media of the present invention. The coloring matters (II) used herein are the same as those used in the first optical recording media.

An optical recording film of the second optical recording media of the present invention may be formed solely from the above-mentioned second optically active organic compounds, or may be formed, if necessary, by dispersing or dissolving said compounds in other polymers excellent in film-forming properties.

Useful polymers excellent in film-forming properties are the same polymers as used in the first optical recording media of the present invention.

The second optical recording media of the present invention are suitably used in their state where the above-mentioned component is applied on a substrate to form a thin film by the coat method, spin coat method, or Langmuir's blojet method.

Practical uses of the above-mentioned first and second optical recording media of the present invention, that is, the recording-erasing-reading out of information, are illustrated hereinafter.

In the case of the first recording media of the present invention, the recording media comprising (I) the first optically active organic compounds and (II) coloring matters is irradiated with ultraviolet rays, for example, those having a wavelength of 360 nm, whereupon the angle of optical rotation of their radiated portion of the media will change and this change in the angle of optical rotation can be detected by means of light, for example, that having a wavelength of 700 nm. On one hand, the portion having the changed angle of optical rotation by the irradiation of ultraviolet rays having a wavelength of 360 nm is irradiated with visible light, for example, that having a wavelength of 560 nm, whereupon the changed angle of optical rotation returns to it original state, and this change can also be detected by means of light, for example, that having a wavelength of 700 nm.

The portion of the recording media having the changed angle of optical rotation can be brought back to it original state by heating said recording media.

In the case of the second optical recording media of the present invention, the optical recording media comprising the second optically active organic compounds is irradiated with ultraviolet ray, for example those having a wavelength of 360 nm, whereupon the angle of optical rotation of the irradiated portion of the media, and this change in the angle of optical rotation can be detected by means of light, for example, that having a wavelength of 589 nm. On the hand, the portion of the media having the changed angle of optical rotation by irradiation of ultrabiolet rays having a wavelength of 360 nm is heated, for example, at a temperature of about 100° C, whereupon the changed angle of optical rotation returns back to its original state, and this change can also be detected by means of light, for example, that having a wavelength of 589 nm.

The portion of the media having changed angle of optical rotation can also be brought back to its original state by irraditing the media with light having a specific wavelength.

As illustrated above, in the recording media of the present invention, light for recording information, light for erasing the recording information and light for reading out the recorded information may be light individually having a different wavelength, and accordingly the information recorded on the recording media can be reproduced repeatedly without destroying said recorded information. In addition thereto, the recording media of the present invention is capable of highly sensitive and high density recording.

The optical recording system of the present invention is illustrated hereinafter.

In the optical recording system of the present invention, a plurality of information recording layers which are different from one another in light absorption wavelength region are laminated successively on a substrate to form optical recording media, the thus formed optical recording media having a plurality of information recording layers which have different optical activity change due to varied wavelength regions of light irradiation from one another are irradiated with light, and the difference in optical activity of the optical recording media before and after the irradiation is detected to effect the recording of information and reading-out of the recorded information.

In order that an angle of optical rotation of the optical recording media, i.e. information recording layers,

varies by irradiation with light, it is absolutely necessary that said optical recording media contain therein optically active substances which vary in optical activity by irradiation with light. The optically active substances absorb light energy at the time when they are irradiated with light, and optically isomerize or change their state of aggregation by means of this energy, whereby an angle of optical rotation of said optically active substance varies. In that case, the optically active substances themselves must have a light absorption site in the molecule. Furthermore, optically active substances which do not absorb light by themselves may also be used in combination with coloring matters, wherein the coloring matters absorb light energy generated by irradiation with light, and the light energy optically isomerized said optically active substances or change their state of aggregation. In this connection, the optically active substances referred to herein are intended to include substances which are inherently optically inactive but become optically active when their state of aggregation is controlled by the influence of other compounds which exhibit optical activity (for example, methyl orange as disclosed in Chem, Lett., 1981, 1207).

As the optical recording media used in the optical recording systems of the present invention, there may be used the first optical recording media or second optical recording media of the present invention as aforementioned.

The optical recording media used in the optical recording systems of the present invention are illustrated below with reference to their structure and recording system employed therefor.

The optical recording media used in the optical recording system of the present invention are formed by successively laminating at least two information recording layers containing the above-mentioned components on a substrate, wherein absorption wavelength regions of said layers must be different from each other. That is, as shown in the accompanying Fig.1, in an optical recording medium 1 used in the optical recording system of the present invention, a first information recording layer 3 and a second information recording layer 4 are provided on a substrate 2 in this order. The wavelength region of light, with which the first information recording layer 3 is irradiated, is different from that with which the second information recording layer 4 if irradiated. For instance, when the first information recording layer 3 and the second information recording layer 4 are irradiated simultaneously with ultraviolet rays having a wavelength of 360 nm, whereby said layers are each colored, and this state is called an initial state. Subsequently, the two lavers in this initial state are irradiated with light, for example, that having a wavelength of 550 nm, whereupon in the irradiated portion of the first information recording layer 3 the angle of optical rotation thereof changes, for example, by + 1°, and in this case no change in angle of optical rotation is observed in the second information recording lavers 4. On one hand, when the two layers are irradiated in such an initial state are irradiated with light, for example, that having a wavelength of 600 nm, in the irradiated portion of the second information recording layer 4, the angle of optical rotation thereof changes, for example. by -1°, and in this case no change in the angle of optical rotation occurs in the first information recording layer 3.

Such changes in the angle of optical rotation in these two layers 3 and 4 may be determined by means of light having a wavelength, for example, that of 700 nm, which is different from the wavelength of the light used to change the angle of optical rotation of these two layers.

Accordingly, in the optical recording media of the present invention, it becomes possible to record information of a plurality of bits per one spots of light and enhance density in recording. In the optical recoding media of the present invention, furthermore, the light for writing information, light for erasing the recorded information and light for reading out the recorded information may have different wavelength and accordingly the information recorded on the recording media can be reproduced repeatedly without destroying said recorded information.

The present invention will be illustrated below in more detail with reference to examples, but it should be construed that the invention is in no way limited to those examples.

Example 1 (Optical recording medium comprising the first optically active organic compound)

A soap-like solution was obtained by ultrasonic dispersing in 100 ml of water 10 moles of L-form of a compound of the following formula.

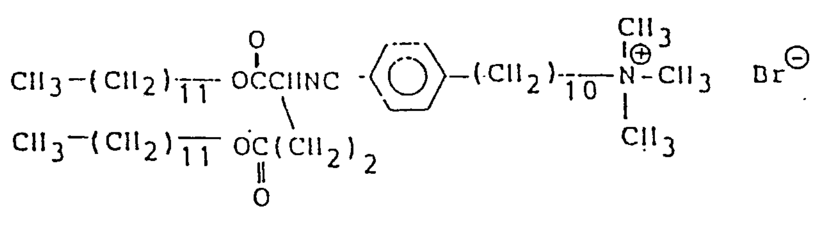

Separately, 10 moles (monomer unit) of sodium polystyrene-sulfonate was dissolved in 100 ml of water. The two solution thus obtained were mixed together, the resulting precipitate was collected by filtration, and the collected precipitate was washed with methanol followed by vacuum drying to obtain, 3 g of a white solid.

This solid (the first optically active organic compound) and N-octadecyl-6-nitro-7′,3′,3′-trimethylspiro[2H-1-benzopyran-2,2′-indoline] as a coloring matter were dissolved in chloroform to prepare a

chloroform solution so that it contain 10 % by weight, based on said solid, of said coloring mater. This solution was casted on a quartz plate and dried by allowing it to stand at 50 °C in a dark room to obtain a transparent recording film of about 4 μm in film thickness.

The recording film thus obtained was measured in optical activity at 700 nm by using an automatic polarimeter (manufactured and sold by Horiba K.K), whereupon the angle of optical rotation if this film changed by + 0.12° when irradiated with ultraviolet rays of 360 nm. Successively, this film was irradiated with visible light of 560 nm, whereupon the angle of rotation changed by - 0.12° and returned to the state prior to the ultraviolet irradiation. Thereafter, this film was irradiated alternately with ultraviolet rays, (360 nm) and visible (560 nm) over again, whereupon the angle of optical rotation of the film changed repeatedly in the manner as mentioned above.

Example 2 (Optical recording medium comprising the first optically active organic compound)

A soap-like solution was obtained by ultrasonic dispersing in 100 ml of water 10 moles of L-form of a compound of the following formula.

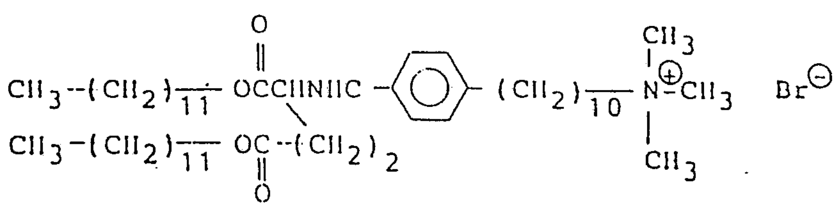

Separately, 10 moles (monomer unit) of sodium polystyrene-sulfonate was dissolved in 100 ml of water. The two solutions thus obtained were mixed together, the resulting precipitate was collected by filtration, and the collected precipitate was washed with methanol followed by vacuum drying to obtain 3 g of a white solid.

This solid (the first optically active organic compound) and α,α′,δ′-trimethyl-δ-2,5-dimethyl-3-furylfulgide as a coloring matter were dissolved in chloroform to prepare a chlorogorm solution so that it contains 10 % by weight, based on said solid, of said coloring matter.

This solution was casted on a quartz plate and dried by allowing it to stand at 50 °C in a dark room to obtain a transparent recording film.

The recording film thus obtained was measured in optical activity at 640 nm by using the automatic polarimeter, whereupon the angle of optical rotation of this film changed by + 0.08° when irradiated with ultraviolet rays of 360 nm. This film was further irradiated with visible light of 500 nm, the angle of optical rotation changed by - 0.08° and returned to the state prior to the ultraviolet irradiation. Thereafter, this film was irradiated alternately with ultraviolet rays (360 nm) and visible light (500 nm) over again, whereupon the angle of optical rotation of this film changed repeatedly in the manner as mentioned above.

Example 3 (Optical recording medium comprising the first optically active organic compound)

A soap-like aqueous solution was prepared by ultrasonic dispersing in 5 ml of water for 2 minutes 100 mg of L-form of a compound of the following formula and 10 mg of a cyanine dye.

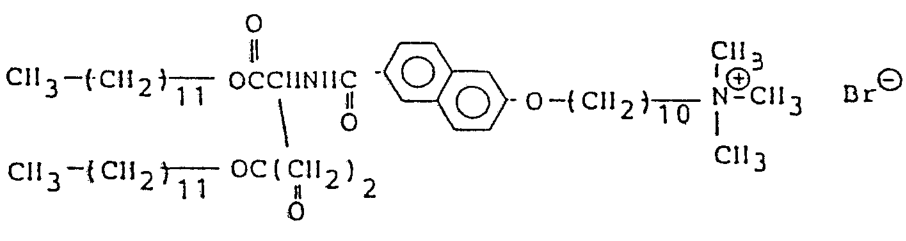

This aqueous solution was casted on a quartz plate and allowed to stand at 50 °C in a dark room to obtain a transparent film.

This film was irradiated with visible light of 700 nm, whereupon the angle of rotaion of this film changed by - 0.07°.

Example 4 (Optical recording medium comprising the second optically active organic compound)

4 X $10^{-3}$M Aqueous solution was prepared by ultrasonic dispersion L-form of a compound of the following formula in water for 2 minutes.

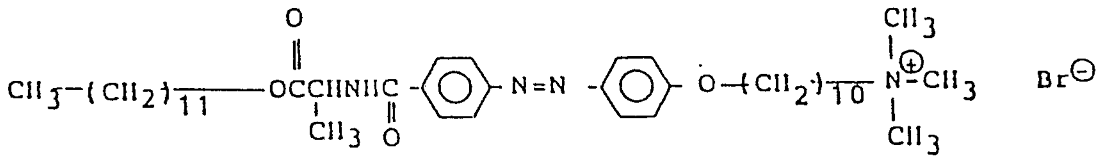

This aqueous solution was casted on a quartz plate and dried by allowing it to stand at 50 °C in a dark room to obtain a transparent recording film.

A change in the angle of optical rotation at 589 nm was investigated using the automatic polarimeter by irradiating this film with ultraviolet rays of 360 nm. As the result of the ultraviolet irradiation, the angle of optical rotation of this film changed by + 0.1° at room temperature. Successively, this film was heat treated at 100 °C, whereupon the angle of optical rotation at room temperature changed by - 0.1° and returned to the state prior to the ultraviolet irradiation.

Example 5 (Optical recording medium comprising the second optically active organic compound)

A soap-like solution was obtained by ultrasonic dispersing 10 moles of L-form of a compound of the following formula in 100 ml of water.

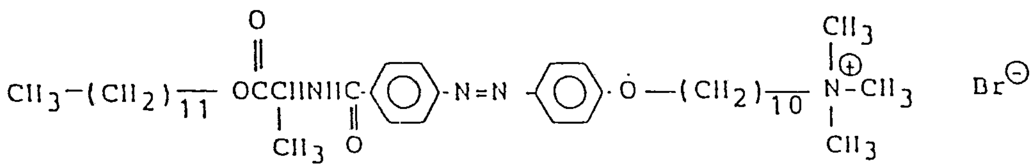

Separately, 10 moles (monomer unit) of sodium polystyrene-sulfonate was dissolved in 100 ml of water. The two solutions thus obtained were mixed together, the resulting precipitate was collected by filtration, and the collected precipitate was washed with methanol followed by vacuum drying to obtain 2 g of a white solid.

A solution of this solid in chloroform was casted on a quartz plate and dried by allowing it to stand at 50 °C in a dark room to obtain a transparent recording film.

This film was irradiated with ultraviolet rays of 360 nm, whereupon the angle of optical rotation of the film changed bV + 0.09°. Successively, this film was heated at 100 °C, whereupon the angle of optical rotation at room temperature changed by -0.09° and returned to the state prior to the ultraviolet irradiation.

Example 6 (Optical recording medium having a plurality of information recording layers

A chloroform solution containing an ion complex (a) of a compound [A] of the formula

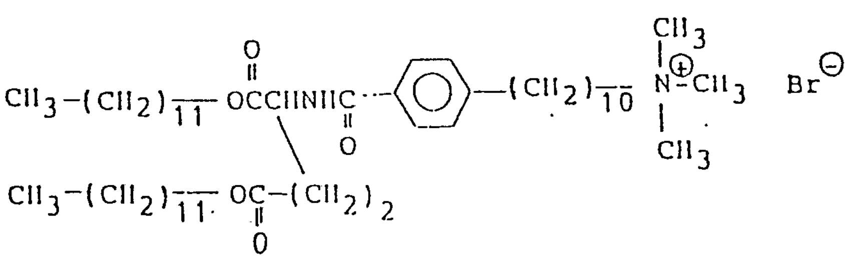

with sodium polystyrenesulfonate and 10 % by weight, based on the ion complex (a), of a coloring matter (A) 6-nitro-1′,3′,3′-trimethylspiro[2H-1-benzopyran-2,2′-indoline] was applied by the spin coat method on a glass substrate to a film thickness of 7μm to form thereon a first information recording layer. Subsequently, on the first information recording laver was laminated a second information recording layer of 8μm in thickness in the same manner as in the case of the first information recording layer except that the compound [A] used therein was of D-form and the coloring matter (B) used therein was 5 bromo-1′,3′-dimethyl-6-methoxy-8-nitro-3′-phenylspiro (2H-1-benzopyran -2,2′-indoline), whereby are recording medium was prepared. The first information recording layer absorbs preferentially light of 550 nm, and the second information recording layer absorbs preferentially light of 600 nm.

When the redording medium thus prepared was irradiated with ultraviolet rays of 360 nm, the two information recording layers thereof were colored, and this state was taken as an initial state. When this recording medium was irradiated in the initial state with light of 550 nm, or with light of 600 nm, changes in the angle of optical rotation of the recording medium at 700 nm were -0.1° and + 0.1°, respectively.

By virtue of adopting the above-mentioned system, it was demonstrated that three different stages (initial state, state wherein the angle of optical rotation changed by - 0.1° and state wherein the angle of optical rotation changed by - 0.1°) are formed in one light spot, whereby the recording density of recording medium can be enhanced to 1.5 times that of the conventional recording medium and, moreover, that the information recording can be reproduced by means of light of the wavelength region which does not destroy the recorded information.

Example 7 (Optical recording medium comprising a plurality of information recording layers)

On the recording medium comprising the first and second information recording layers obtained in Example 6 was further formed in the same manner as in Example 6 a third information recording layer comprising the ion complex of the compound [A] with sodium polystyrenesulfonate used in Example 6 and as a coloring matter (C) 1,3′-[dimethyl-5′,6-dinitro-8-methoxy-3′-phenylspiro (2H-1-benzopyran-2,2′-indoline] and having a film thickness of 7μm. This coloring matter (c) absorbs preferentially light of 650 nm.

The recording medium thus obtained was irradiated with ultraviolet rays of 360 nm to bring about the initial state as aforesaid, and was then irradiated with light of 550 nm, whereupon the angle of optical rotation of the first information recording layer changed by 0.05°. Further, when the recording medium was irradiated with light of 600 nm, the angle of optical rotation of the second information recording layer changed by 0.1°, and then irradiated with light of 650 nm, the angle of optical rotation of the third information recording layer changed by 0.2°. In the above cases, a changed in the angle of optical rotation of these layers was determined by means of light of 750 nm.

Table 1

| No. | Wavelength of light irradiated (nm) | Change in the angle of optical rotation |
|---|---|---|
| 4 | 650 | -0.2 ° |
| 5 | 600 | -0.1 ° |
| 6 | 550 | -0.05° |

In the recording medium comprising a plurality of information recording layers as demonstrated above, a plurality of desired pieces of information in one recording spot. Further, the recording information can be read out without destroying said recording information by means of light having a wavelength different from those of light for recording and light for erasing. On that account, the desired information can be written in and read out with high density and high sensitivity.

## Claims

1. An optical recording medium comprising (I) an optically active organic compound having a hydrophobic group and a hydrophilic group and (II) a coloring matter, said medium undergoing a variation in structure or state of aggregation upon irradiation with light.

2. An optical recording medium according to claim 1 wherein the coloring matter is a photochromic compound.

3. An optical recording medium according to claim 2 wherein the photochromic compound is spiropyran, fulgide, thioindigo or azobenzene.

4. An optical recording medium comprising an optically active organic compound having a hydrophobic group and a hydrophilic group, and a light absorption site in the molecule, said medium undergoing a variation in structure or state of aggregation upon irradiation with light.

5. An optical recording medium according to claim 4 wherein the light absorption site is a spiropyran molecular group, fulgide molecular group, thioindigo molecular group or azobenzene molecular group.

6. An optical recording medium according to any one of the preceding claims wherein the hydrophilic group is a sulfone group, carboxyl group, phosphoric acid group, hydroxyl group or a salt thereof, or amino group, substituted amino group, quaternary ammonium group or a salt thereof.

7. An optical recording medium according to any one of the preceding claims wherein the hydrophobic group is an optionally halogen-substituted straight chain alkyl group of 4 to 30 carbon atoms.

8. An optical recording system comprising at least two information recording layers laminated to a

substrate which layers differ from one another in light absorption wavelength region and which differ from one another in a change of the angle of optical rotation upon irradiation with light.

9. An optical recording system according to claim 8 wherein the optical recording media laminated on the substrate are recording media as claimed in claims 1 and 4.

10. An optical recording method which comprises exposing imagewise to light an optical recording system as claimed in claim 8 or 9 to record said image and reading said image by detecting the difference in the angle of optical rotation of the recording media before and after the irradiation.

FIG.1